# EUROPEAN PATENT APPLICATION

(11) **EP 4 648 279 A1**
(43) Date of publication of application: **12.11.2025**
(21) Application number: 25734180.0
(22) Date of filing: 21.04.2025
(51) Int. Cl.: H02S 40/34

(54) **PHOTOVOLTAIC POWER GENERATION APPARATUS AND PHOTOVOLTAIC POWER GENERATION SYSTEM**

(71) Applicant: Suzhou Xinchengen Technology Co., Ltd, Suzhou, Jiangsu 215100 (CN)
(72) Inventor: JIANG, Weipeng, Suzhou, Jiangsu 215100 (CN); WANG, Fan, Suzhou, Jiangsu 215100 (CN); CHEN, Xiaochun, Suzhou, Jiangsu 215100 (CN)
(74) Representative: Mathys & Squire
(86) International application number: PCT/CN2025/090152
(87) International publication number: WO 2025/171829

(57) **Abstract**

Embodiments of the present disclosure provide a photovoltaic power generation apparatus and a photovoltaic power generation system. The photovoltaic power generation apparatus comprises: a photovoltaic panel comprising a photovoltaic cell unit array and a first surface and a second surface opposite each other; a plurality of terminal members mounted independently of each other on the first surface of the photovoltaic panel and each electrically coupled to a respective portion of photovoltaic cell units in the photovoltaic cell unit array; and an inverter device mounted on the first surface of the photovoltaic panel and comprising a bar-shaped hollow housing and an inverter circuit located in the bar-shaped hollow housing, the inverter circuit being electrically coupled to the plurality of terminal members and converting direct current power received from the photovoltaic cell unit array via the plurality of terminal members into alternating current power, the bar-shaped hollow housing being arranged to extend in an arrangement direction of the plurality of terminal members and to abut against the plurality of terminal members.

## Description

### FIELD

The present disclosure relates to the field of photovoltaic power generation technologies, and more specifically, to a photovoltaic power generation apparatus and a photovoltaic power generation system comprising the photovoltaic power generation apparatus.

### BACKGROUND

Photovoltaic power generation uses the photovoltaic effect of photovoltaic cells to convert solar or light energy into electrical energy, and has many advantages such as cleanness, environment-friendliness and re-generation. In order to ensure that the electrical energy generated by the photovoltaic cells can meet the usage requirements of a power grid or a load and to improve the power generation efficiency of the photovoltaic cells, a power conversion apparatus such as a micro-inverter device usually needs to be provided to convert the voltage or current generated by the photovoltaic cells into the desired voltage and current.

At present, it is often necessary to electrically connect a power conversion device, such as a micro-inverter, to a photovoltaic module on the site of installation of the photovoltaic module, and the installation and connection process is relatively cumbersome and error-prone. In addition, since the installation site is generally a site such as a roof which is not easily accessible by a worker, the installation is difficult and safety problems are likely to occur.

### SUMMARY

To at least partially address the above and other potential problems, embodiments of the present disclosure provide a photovoltaic power generation apparatus and a photovoltaic power generation system.

According to a first aspect of the present disclosure, there is provided a photovoltaic power generation apparatus, comprising: a photovoltaic panel comprising a photovoltaic cell unit array and a first surface and a second surface opposite each other; a plurality of terminal members mounted independently of each other on the first surface of the photovoltaic panel and each electrically coupled to a respective portion of the photovoltaic cell units in the photovoltaic cell unit array; and an inverter device mounted on the first surface of the photovoltaic panel and comprising a bar-shaped hollow housing and an inverter circuit located in the bar-shaped hollow housing, the inverter circuit being electrically coupled to the plurality of terminal members and configured to convert direct current power received from the photovoltaic cell unit array via the plurality of terminal members into alternating current power, the bar-shaped hollow housing being arranged to extend in an arrangement direction of the plurality of terminal members and to abut against the plurality of terminal members.

In some embodiments of the present disclosure, the photovoltaic cell unit array comprises a first sub-array and a second sub-array separated from each other by a separation region in the photovoltaic panel, and the plurality of terminal members and the inverter device are arranged on a partial surface of the first surface corresponding to the separation region.

In some embodiments of the present disclosure, a width of a side surface of the bar-shaped hollow housing facing towards the first surface is less than a spacing between the first sub-array and the second sub-array.

In some embodiments of the present disclosure, the bar-shaped hollow housing is detachably fixed to the plurality of terminal members, and the inverter circuit is electrically coupled to the plurality of terminal members in a pluggable manner.

In some embodiments of the present disclosure, the plurality of terminal members are adhesively fixed to the first surface of the photovoltaic panel.

In some embodiments of the present disclosure, each terminal member comprises a shell, terminals, and a waterproof member.

In some embodiments of the present disclosure, the photovoltaic cell unit array comprises a plurality of groups of photovoltaic cell units corresponding to the plurality of terminal members, the photovoltaic cell units in each group of photovoltaic cell units being connected to each other in series, parallel, or series-parallel, and electrically coupled to the respective terminal member, and wherein the inverter circuit comprises a DC-AC converter and a plurality of DC-DC converters, the plurality of DC-DC converters being electrically coupled to the plurality of terminal members, respectively, at an input side thereof, and being connected in series with each other, in parallel with each other or in series-parallel with each other at an output side thereof.

In some embodiments of the present disclosure, the inverter circuit comprises a gallium nitride power device.

In some embodiments of the present disclosure, the first surface is a back surface of the photovoltaic panel and the second surface is a front surface of the photovoltaic panel.

In some embodiments of the present disclosure, the photovoltaic panel further comprises a frame, and a height that the bar-shaped hollow housing projects outwardly from the first surface is no more than a height that the frame projects outwardly from the first surface.

In some embodiments of the present disclosure, the bar-shaped hollow housing comprises a heat dissipation mechanism located on a side surface of the bar-shaped hollow housing facing away from the first surface.

According to a second aspect of the present disclosure, there is provided a photovoltaic power generation system, comprising: at least one photovoltaic power generation apparatus according to the first aspect.

The Summary is provided to introduce a selection of concepts in a simplified form that are further described below in the Detailed Description. This Summary is not intended to identify key features or essential features of the disclosure, nor is it intended to limit the scope of the disclosure.

### BRIEF DESCRIPTION OF THE DRAWINGS

Through the following detailed description of example embodiments with reference to the figures, the above and other objectives, features and advantages of the present disclosure will become more apparent, wherein the same reference numerals usually denote the same parts in the example embodiments of the present disclosure.
FIG. 1 illustrates a schematic diagram of a photovoltaic power generation system and an AC power grid according to an embodiment of the present disclosure.
FIG. 2 illustrates a perspective view of a photovoltaic power generation apparatus in a photovoltaic power generation system according to an embodiment of the present disclosure.
FIG. 3 illustrates a bottom view of a photovoltaic power generation apparatus in a photovoltaic power generation system according to an embodiment of the present disclosure.
FIG. 4 illustrates a partial perspective view of a photovoltaic power generation apparatus according to an embodiment of the present disclosure.
FIG. 5 illustrates a perspective view of an inverter device of a photovoltaic power generation apparatus according to an embodiment of the present disclosure.
FIG. 6 illustrates a perspective view of a photovoltaic panel and a plurality of terminal members according to an embodiment of the present disclosure.
FIG. 7 illustrates a schematic block diagram of an inverter device according to an embodiment of the present disclosure.
FIG. 8 illustrates an exemplary circuit diagram of a plurality of DC-DC converters in an inverter device according to an embodiment of the present disclosure.

### DETAILED DESCRIPTION OF EMBODIMENTS

Embodiments of the present disclosure will now be described in detail with reference to the accompanying drawings. Although the drawings illustrate some embodiments of the present disclosure, it would be appreciated that the present disclosure may be implemented in various manners but cannot be construed as being limited by the embodiments illustrated herein. Rather, these embodiments are provided to disclose the present disclosure more thoroughly and completely and enable the scope of the present disclosure to be conveyed to those skilled in the art completely. Those skilled in the art can obtain alternative technical solutions from the following description without departing from the spirit and scope of the present disclosure.

The term "include" and its variants used in the text herein are to be read as open-ended terms that mean "comprises, but is not limited to". The term "or" means "and/or" unless otherwise specified. The term "based on" is to be read as "based at least in part on." The term "an example" or "one embodiment" is to be read as "at least one example embodiment." Other definitions, either explicit or implicit, may also be included below.

Embodiments of the present disclosure provide an improved photovoltaic power generation apparatus. In the improved solution, a housing of an inverter device is bar-shaped and is extended and arranged along a plurality of terminal members, so that the inverter device may be integrally preassembled to the photovoltaic panel and engaged with the plurality of terminal members. Thus, the assembly of the photovoltaic module and the inverter device may be completed in advance prior to factory shipment, which avoids the tediousness and inconvenience caused by on-site wiring and installation, reduces the workload of on-site installation of the photovoltaic modules, and facilitates the transportation of the photovoltaic modules and their accessory devices.

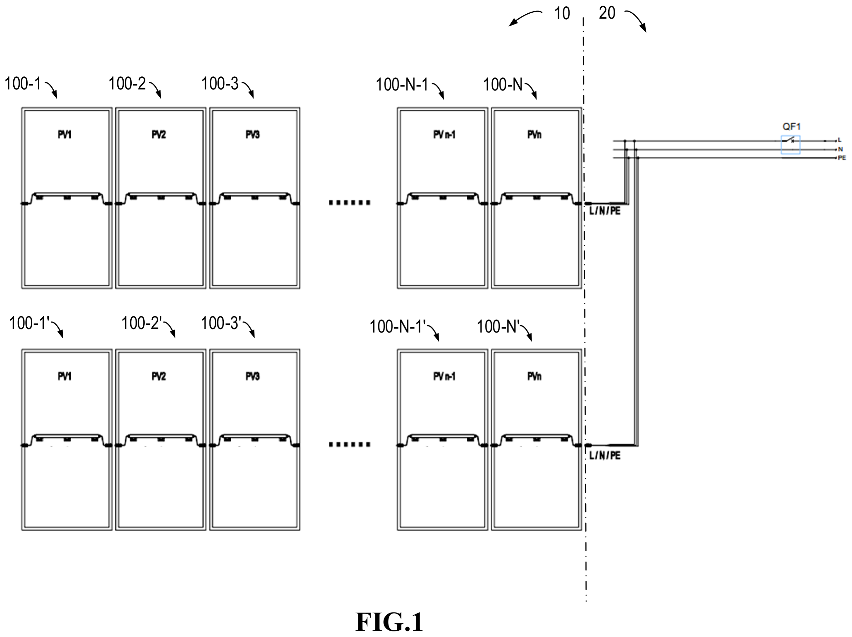

FIG. 1 illustrates a schematic circuit diagram of a photovoltaic power generation system 10 and an AC power grid 20 according to an embodiment of the present disclosure. As shown in FIG. 1, the photovoltaic power generation system 10 comprises one or more photovoltaic power generation apparatuses, such as a first group of photovoltaic power generation apparatuses 100-1, 100-2, 100-3, ... 100-N-1, and 100-N and a second group of photovoltaic power generation apparatuses 100-1', 100-2', 100-3', ... 100-N-1', and 100-N'. As an example, the first group of photovoltaic power generation apparatuses 100-1, 100-2, 100-3, ... 100-N-1, and 100-N are connected in series with each other and to a live line L, a neutral line N and a ground line PE of the AC power grid 20, and the second group of photovoltaic power generation apparatuses 100-1', 100-2', 100-3', ... 100-N-1', and 100-N' are connected in series with each other and output to the live line L, the neutral line N and the ground line PE of the AC power grid 20. The AC power grid 20 may be, for example, a power distribution grid to receive and transmit power output by the photovoltaic power generation system 10. However, it may be appreciated that the photovoltaic power generation system 10 may be coupled to other types of AC equipment or loads in addition to the power distribution grid, which is not limited in the present disclosure.

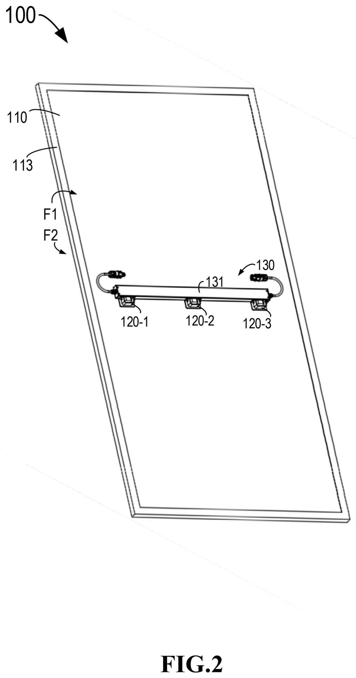

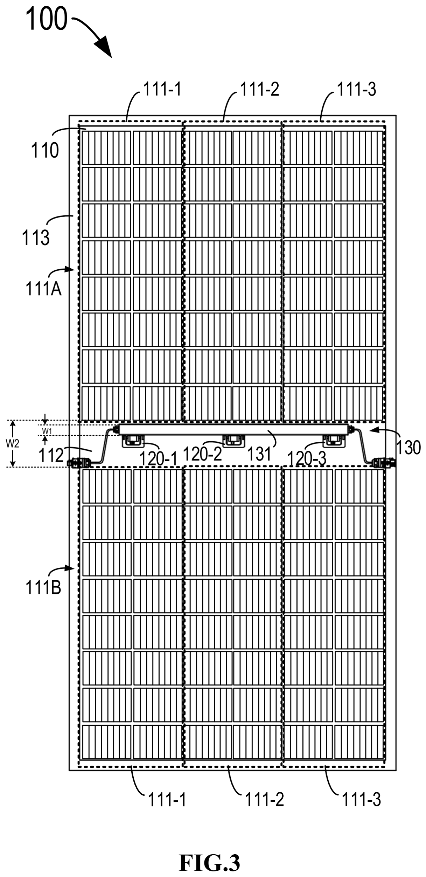

FIG. 2 and FIG. 3 respectively illustrate a perspective view and a bottom view of a photovoltaic power generation apparatus 100 in a photovoltaic power generation system 10 according to an embodiment of the present disclosure. The photovoltaic power generation apparatus 100 may be one photovoltaic power generation apparatus in the first group of photovoltaic power generation apparatuses 100-1, 100-2, 100-3, ... 100-N-1, and 100-N and the second group of photovoltaic power generation apparatuses 100-1', 100-2', 100-3', ... 100-N-1' and 100-N'.

As shown in FIG. 2 and FIG. 3, the photovoltaic power generation apparatus 100 comprises a photovoltaic panel 110 comprising a photovoltaic cell unit array and a first surface F1 and a second surface F2 opposite to each other. As an example, the photovoltaic cell unit array consists of a plurality of photovoltaic cell units, and at least one of the first surface F1 and the second surface F2 of the photovoltaic panel 110 may receive sunlight such that the light energy is converted to electrical energy by the plurality of photovoltaic cell units in the photovoltaic panel 110. In one example, the photovoltaic panel 110 may be a double-glass photovoltaic module that is encapsulated with double layers of glass having a high light transmittance and the photovoltaic cell units are sandwiched by the double layers of glass, whereby both surfaces of the photovoltaic panel 110 are capable of receiving light energy. In addition, the photovoltaic panel 110 may also include other components or elements as needed, such as a frame or backsheet, an encapsulation film, etc. In one example, the photovoltaic cells in photovoltaic panel 110 comprise crystalline silicon cells, i.e., a photovoltaic cell unit array formed by a plurality of crystalline silicon cell units. In another example, the photovoltaic cells in photovoltaic panel 110 comprise stacked cells comprised of perovskite cells and crystalline silicon cells. In the stacked cells, a cell unit array formed by a plurality of crystalline silicon cells is disposed in the photovoltaic panel 110, and the crystalline silicon cell unit array is further covered with a film layer of perovskite cells. With the sheet-like perovskite cells and the sheet-like crystalline silicon cell array being stacked together in a stacked manner, two types of photovoltaic cells may be placed in the same photovoltaic module, whereby cells of different band gaps may be combined to achieve segmented utilization of the solar spectrum, which achieves more efficient light absorption and conversion, effectively improves power conversion efficiency, reduces energy loss, and also does not take up additional footprint.

In some embodiments of the present disclosure, the photovoltaic cell unit array comprises a first sub-array 111A and a second sub-array 111B separated from each other by a separation region 112 in the photovoltaic panel 110. Specifically, the photovoltaic cell unit array in the photovoltaic panel 110 may be divided into two sub-arrays connected in parallel and arranged in two opposing regions which may be separated by separation region 112. In other words, no photovoltaic cell units are disposed in the separation region 112. It is possible to, by arranging two sub-arrays in parallel, effectively reduce the overall internal resistance of the photovoltaic cell units, help to improve the heat dissipation of the cell units, and reduce the risk of hot spots.

In some embodiments of the present disclosure, the photovoltaic cell unit array comprises a plurality of groups of photovoltaic cell units 111-1, 111-2, 111-3, the photovoltaic cell units in each group of photovoltaic cell units being connected to each other in a series fashion, a parallel fashion, or a series-parallel fashion. As an example, the cell units of the first and second columns in the first sub-array 111A and the cell units of the first and second columns in the second sub-array 111B may constitute a first group of photovoltaic cell units 111-1, wherein the cell units of the first and second columns in the first sub-array 111A may be connected in series with each other to form one cell string, and the cell units of the first and second columns in the second sub-array 111B may be connected in series with each other to form the other cell string, the two cell strings being further connected in parallel with each other so as to be connected to a later-stage apparatus. The second group of photovoltaic cell units and the third group of photovoltaic cell units may be formed in a similar manner. Specifically, the cell units of the third and fourth columns in the first sub-array 111A and the cell units of the third and fourth columns in the second sub-array 111B may constitute a second group of photovoltaic cell units 111-2, wherein the cell units of the third and fourth columns in the first sub-array 111A may be connected in series with each other to form one cell string, and the cell units of the third and fourth columns in the second sub-array 111B may be connected in series with each other to form the other cell string, and the two cell strings are further connected in parallel with each other; the cell units of the fifth and sixth columns in the first sub-array 111A and the cell units of the fifth and sixth columns in the second sub-array 111B may constitute a third group of photovoltaic cell units 111-3, wherein the cell units of the fifth and sixth columns in the first sub-array 111A may be connected in series with each other to form one cell string, the cell units of the fifth and sixth columns in the second sub-array 111B may be connected in series with each other to form the other cell string, and the two cell strings are further connected in parallel with each other. It may be appreciated that the number of groups, columns, and rows of photovoltaic cell units shown in the figures are merely exemplary, and that the photovoltaic panel 110 may have a greater or lesser number of groups, columns, and rows.

According to embodiments of the present disclosure, the photovoltaic power generation apparatus 100 further comprises a plurality of terminal members 120-1, 120-2, 120-3 that are mounted on the first surface F1 of the photovoltaic panel 110 independently of each other and that are each electrically coupled to a respective portion of the photovoltaic cell units in the photovoltaic cell unit array. Specifically, each of the terminal members is a separate member from the other terminal members and serves to provide an electrical interface for the power output of a corresponding group or portion of photovoltaic cell units. As an example, the terminal member 120-1 may be coupled to the first group of photovoltaic cell units 111-1, that is, a cell unit string formed by the cell units of the first and second columns of the first sub-array 111A and a cell unit string formed by the cell units of the first and second columns of the second sub-array 111B are coupled to terminals in the terminal member 120-1 in parallel with each other. Similarly, the terminal member 120-2 may be coupled to the second group of photovoltaic cell units 111-2, that is, a cell unit string formed by the cell units of the third and fourth columns of the first sub-array 111A and a cell unit string formed by the cell units of the third and fourth columns of the second sub-array 111B are coupled to terminals in the terminal member 120-2 in parallel with each other; the terminal member 120-3 may be coupled to the third group of photovoltaic cell units 111-3, that is, a cell unit string formed by the cell units of the fifth and sixth columns of the first sub-array 111A and a cell unit string formed by the cell units of the fifth and sixth columns of the second sub-array 111B are coupled to terminals in the terminal member 120-3 in parallel with each other.

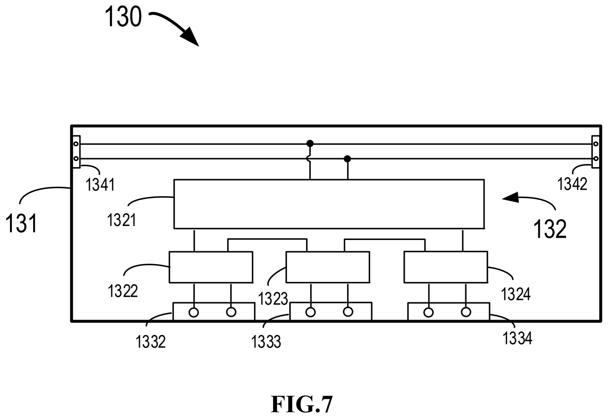

According to an embodiment of the present disclosure, the photovoltaic power generation apparatus 100 further comprises an inverter device 130 mounted on the first surface F1 of the photovoltaic panel 110. The inverter device 130 comprises a bar-shaped hollow housing 131 and an inverter circuit 132 (see FIG. 7) located in the bar-shaped hollow housing 131. The inverter circuit 132 is electrically coupled to the plurality of terminal members 120-1, 120-2, 120-3 and converts DC power received from the photovoltaic cell unit array via the plurality of terminal members 120-1, 120-2, 120-3 into AC power. The bar-shaped hollow housing 131 is configured to extend in an arrangement direction of the plurality of terminal members 120-1, 120-2, 120-3 and abut against the plurality of terminal members 120-1, 120-2, 120-3.

Specifically, the inverter device 130 is mounted on a surface on the same side as the plurality of terminal members 120-1, 120-2, 120-3, and is engaged with the plurality of terminal members 120-1, 120-2, 120-3 so as to convert the DC power generated by the photovoltaic cell units in the photovoltaic cell unit array into AC power, and output the AC power to a later-stage apparatus such as the AC power grid 20. Since the inverter device 130 and its housing 131 are formed in the shape of a bar and extend in the arrangement direction of the plurality of terminal members 120-1, 120-2, 120-3 against the terminal members, it is possible to quickly and conveniently pre-mount and engage the inverter device 130 to the plurality of terminal members 120-1, 120-2, 120-3 so as to be formed as one piece with the photovoltaic panel 110 and the plurality of terminal members 120-1, 120-2, 120-3 and to be transported and mounted as a whole without separately transporting these parts and omitting additional field wiring and mounting steps. In this manner, transportation and on-site installation of the photovoltaic power generation apparatus may be simplified, and problems such as cumbersome installation, wiring errors, and personnel safety, which might occur in on-site installation, may be avoided.

In some embodiments of the present disclosure, the plurality of terminal members 120-1, 120-2, 120-3 and the inverter device 130 are disposed on a partial surface of the first surface F1 corresponding to the separation region 112. Specifically, each of the terminal members 120-1, 120-2, 120-3 and the inverter device 130 is a non-transparent part, and thus can shield light and affect the reception of light by the photovoltaic cell units. The separation region 112 is a region between the two sub-arrays 111A and 111B of the photovoltaic cell units, and is not mounted with the photovoltaic cell units. It is possible to, by arranging the terminal members 120-1, 120-2, 120-3 and the inverter device 130 in the separation region 112, integrate the terminal members and the inverter device on the photovoltaic panel while preventing them from cause an adverse influence on the reception of the light energy by the photovoltaic cell units, without reducing the power generation efficiency of the photovoltaic power generating apparatus.

In some embodiments of the present disclosure, a width W1 of a side surface of the bar-shaped hollow housing 131 facing towards the first surface F1 is less than a spacing W2 between the first sub-array 111A and the second sub-array 111B. In this manner, the inverter device 130 may be fully integrated and installed in the separation region 112 of the photovoltaic panel 110 without shading the photovoltaic cell units, thereby minimizing the impact of these accessory parts on power generation efficiency.

In some embodiments of the present disclosure, the photovoltaic panel 110 further comprises a frame 113, and a height that the bar-shaped hollow housing 131 projects outwardly from the first surface F1 is no more than a height that the frame 113 projects outwardly from the first surface F1. As an example, the frame 113 is used to fix parts such as photovoltaic cell units, glass, etc. and has a thickness that is also the actual thickness of the photovoltaic panel 110. By making the height that the bar-shaped hollow housing 131 projects outwardly from the first surface F1 no more than the height that the frame 113 projects outwardly from the first surface F1, it may be ensured that the overall thickness of the photovoltaic power generation apparatus 100 does not change because the photovoltaic power generation apparatus 100 is mounted with the inverter device 130 and its housing 131. Thereby, a plurality of photovoltaic power generating apparatuses 100 may be stacked in a back-to-back manner during transportation, which facilitates enabling the photovoltaic power generating apparatuses pre-mounted with the inverter devices to transported in a more compact and stable manner, thereby facilitating handling and transportation of the photovoltaic power generation apparatuses to a maximum degree.

In some embodiments of the present disclosure, the bar-shaped hollow housing 131 comprises a heat dissipation mechanism (not shown) located on a side surface of the bar-shaped hollow housing 131 facing away from the first surface F1. As an example, the heat dissipation mechanism may be one or more heat dissipation conductors and/or one or more heat dissipation openings for conducting and releasing the heat inside the bar-shaped hollow housing 131 to the external environment. In this way, it is advantageous to improve heat dissipation of the inverter device 130, and to effectively prevent the heat generated by the inverter device 130 from causing an adverse impact on the photovoltaic cell units.

In some embodiments of the present disclosure, the first surface F1 is a back surface of the photovoltaic panel 110, and the second surface F2 is a front surface of the photovoltaic panel 110. Specifically, the back surface of the photovoltaic panel 110 is a side surface opposite the front surface, and the front surface of the photovoltaic panel 110 exactly face the sun after the photovoltaic power generation apparatus 100 is installed. With the inverter device 130 and the plurality of terminal members 120-1, 120-2, 120-3 being all disposed on the back surface of the photovoltaic panel 110, the impact of these parts on light reception may be avoided, and the appearance of the photovoltaic power generation apparatus may be made more beautiful and simple.

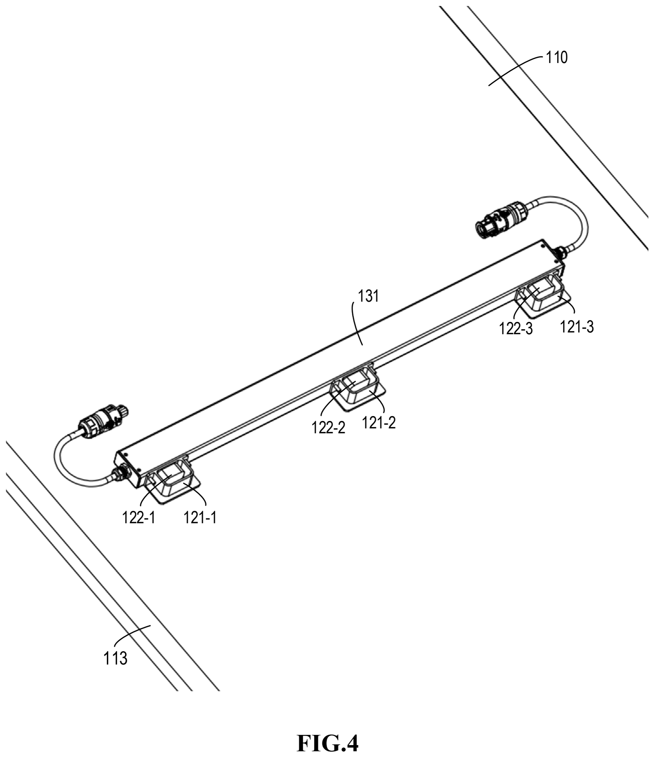

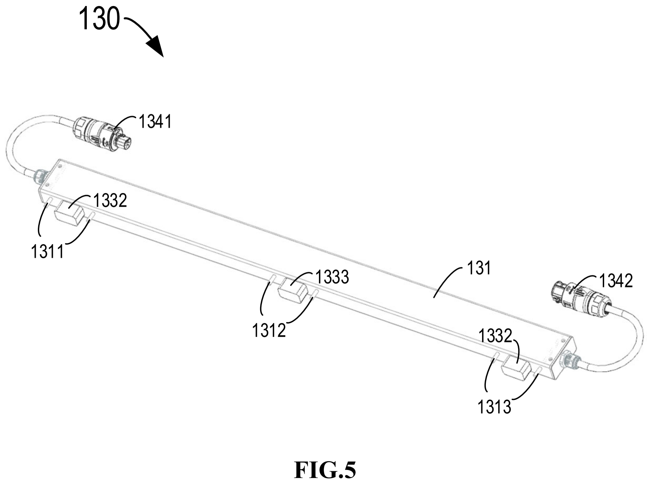

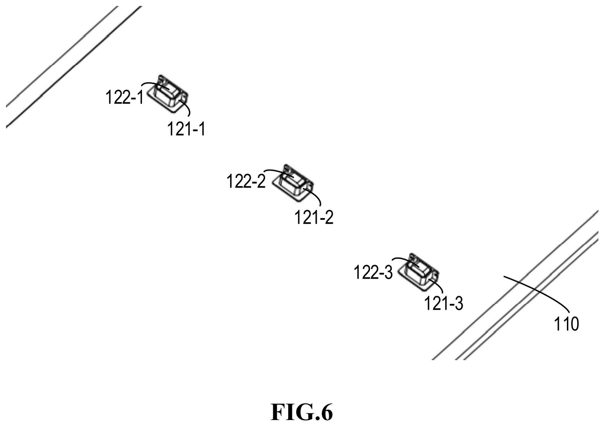

FIG. 4 illustrates a partial perspective view of a photovoltaic power generation apparatus 100 according to an embodiment of the present disclosure, FIG. 5 illustrates a perspective view of an inverter device 130 according to an embodiment of the present disclosure, and FIG. 6 shows a perspective view of a photovoltaic panel 110 and a plurality of terminal members 120-1, 120-2, 120-3 according to an embodiment of the present disclosure.

In some embodiments of the present disclosure, the bar-shaped hollow housing 131 of the inverter device 130 is detachably fixed to the plurality of terminal members 120-1, 120-2, 120-3, and the inverter circuit 132 is electrically coupled to the plurality of terminal members 120-1, 120-2, 120-3 in a pluggable manner. As an example, fixing posts 1311, 1312 and 1313 may be disposed on the bar-shaped hollow housing 131, and the terminal members 120-1, 120-2, and 120-3 may be provided with fixing holes mating with the fixing posts 1311, 1312, and 1313, so that the housing 131 may be mechanically fixed to the terminal members conveniently. In addition, the inverter device 130 may be provided with electric plug members or plug ports 1332, 1333 and 1334 capable of mating with the terminals in the terminal members 120-1, 120-2 and 120-3. For example, the electric plug members or plug ports 1332, 1333 and 1334 may be any of plugs and sockets. Thus, while the housing 131 is fixed to the terminal members, it may be connected using the electrical plug members or plug ports, thereby achieving the electrical connection of the circuit inside the inverter device 130 with the terminal members and the photovoltaic cell units. It will be appreciated that the detachable fixation and pluggable electrical connection between the inverter device 130 and the plurality of terminal members 120-1, 120-2, 120-3 may also be implemented in other suitable manners, for example by a snap-fit connection, a threaded connection, etc. In this manner, the inverter device 130 may be conveniently mounted on the photovoltaic panel 110, and in the event of a failure, the inverter device 130 can be easily replaced and repaired, thereby greatly reducing the difficulty and cost of installing and replacing the inverter device.

In some embodiments of the present disclosure, the plurality of terminal members 120-1, 120-2, 120-3 are adhesively secured to the first surface F1 of the photovoltaic panel 110. By way of example, the terminal members 120-1, 120-2, 120-3 may be attached to a glass layer of the photovoltaic panel 110 with an adhesive so that mounting of the terminal members 120-1, 120-2, 120-3 may be accomplished and damages to surface packaging components such as glass be avoided.

In some embodiments of the present disclosure, each of the terminal members 120-1, 120-2, 120-3 comprises a shell 121-1, 121-2, 121-3, a terminal 122-1, 122-2, 122-3, and a waterproof member. As an example, the terminals 122-1, 122-2, 122-3 may be housed in the shells 121-1, 121-2, 121-3, respectively, thereby preventing the terminals from being exposed to the outside environment. The relatively strong shells 121-1, 121-2, 121-3 also facilitate stable and reliable attachment of the terminal members to the photovoltaic panel 110 and to the housing 131 of the inverter device 130. Furthermore, a waterproof member such as a sealing strip or a sealing film is provided in the shell 121-1, 121-2, 121-3, which effectively prevents water in the external environment from entering the interior of the photovoltaic panel 110 through the terminal members, thereby protecting the photovoltaic cell units in the interior from the impact of external environment.

FIG. 7 illustrates a schematic block diagram of an inverter device 130 according to an embodiment of the present disclosure. As shown in FIG. 7, in some embodiments of the present disclosure, the inverter device 130 comprises a housing 131 and an inverter circuit 132, the inverter circuit 132 including a DC-AC converter 1321 and a plurality of DC-DC converters 1322, 1323, 1324, the plurality of DC-DC converters 1322, 1323, 1324 being adapted to be electrically coupled to the plurality of terminal members 120-1, 120-2, 120-3, respectively, at an input side thereof, and connected in series with each other at an output side thereof. In addition to the connection manner in which the plurality of DC-DC converters 1322, 1323, 1324 are connected in series with each other as shown in FIG. 7, the plurality of DC-DC converters 1322, 1323, 1324 may be connected in parallel with each other or in series-parallel with each other at the output side thereof.

As an example, the plurality of DC-DC converters 1322, 1323, 1324 may be coupled to plug ports 1332, 1333, and 1334, respectively, on the housing 131 and to the plurality of terminal assemblies 120-1, 120-2, 120-3 via the plug ports 1332, 1333, and 1334, respectively. The plurality of DC-DC converters 1322, 1323, 1324 are coupled at their output sides to the DC-AC converter 1321 and to other photovoltaic power generation apparatus or to AC power grid 20 via ports 1341 and 1342. Thus, the DC-DC converters 1322, 1323, and 1324 properly convert the DC power generated by the first group of photovoltaic cell units 111-1, the second group of photovoltaic cell units 111-2, and the third group of photovoltaic cell units 111-3, respectively, and perform a maximum power point tracking (MPPT) operation so that the DC-DC converters adjust the output voltage and current of the corresponding group of photovoltaic cell units to a maximum power point. Thus, an independent MPPT operation may be performed for each group of photovoltaic cell units, so that greater flexibility and higher power generation efficiency may be obtained. Then, the DC-AC converter 1321 converts the DC power outputted from the plurality of DC-DC converters 1322, 1323, and 1324 into AC power to be outputted to the external. It will be appreciated that the number of DC-DC converters, plug ports, terminal members, and groups of cell units is merely illustrative, and that more or fewer DC-DC converters, plug ports, terminal members and groups of cell units may be provided as needed.

Since the plurality of DC-DC converters 1322, 1323, 1324 are employed, it is no longer necessary to provide a power distribution box and a bypass diode for the photovoltaic cell units. In a conventional solution, the photovoltaic module needs to be equipped with a power distribution box to lead out the direct current generated by the photovoltaic module to a later-stage circuit, such as an inverter device. The power distribution box is usually provided with parallel-connected bypass diodes for each group of the groups of cell units, and the bypass diodes may under certain circumstances bypass the respective group of cell units in the photovoltaic module. For example, in a case where a certain group of cell units are shaded or partially damaged, in order to prevent the group of cell units from being damaged due to a hot spot effect, the bypass diode connected in parallel with the group of cell units can bypass the group of cell units, thereby ensuring that other cell units can still operate normally. However, such bypass diode will cause the entire group of bypassed cell units to no longer output power, even though only partial cell units in the group of cell units are shaded or damaged. In addition, the power distribution box and its bypass diodes are parts prone to damages or failure in the photovoltaic system, the power distribution box and its bypass diodes often need to be repaired and replaced during the service life of the photovoltaic system and its photovoltaic modules. The power generated by each group in the plurality of groups of photovoltaic cell units may be directly regulated and output by providing the plurality of DC-DC converters in the inverter device 130. For example, when a certain group of photovoltaic cell units is shaded, the corresponding DC-DC converters may regulate the power output by the group of photovoltaic cell units and outputs the regulated power externally without needs to bypass the group of photovoltaic cell units. Therefore, it is no longer necessary to provide conventional bypass diodes and power distribution boxes for the photovoltaic modules. In this manner, not only the power distribution box and its bypass diodes with a higher failure rate are removed, the reliability of the system is improved, but also it is ensured that the shaded or partially damaged cell units may still output a certain amount of power, thereby improving the energy utilization efficiency.

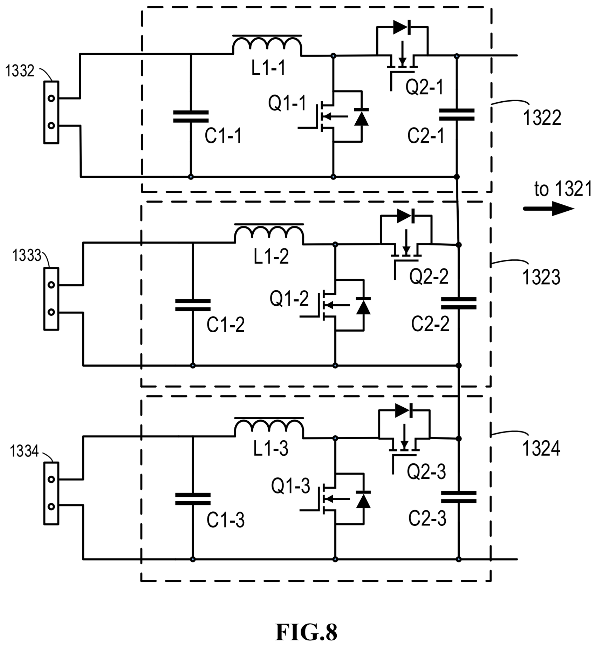

FIG. 8 illustrates an exemplary circuit diagram of a plurality of DC-DC converters 1322, 1323, 1324 in an inverter device 130 according to an embodiment of the present disclosure. As shown in FIG. 8, the plurality of DC-DC converters 1322, 1323, 1324 are DC boost converters. As an example, the DC-DC converter 1322 comprises an inductor L1-1, power switch devices Q1-1 and Q2-1, and capacitors C1-1 and C2-1, and is coupled to a plug port 1332 on one side of the capacitor C1-1; the DC-DC converter 1323 comprises an inductor L1-2, power switch devices Q1-2 and Q2-2 and capacitors C1-2 and C2-2, and is coupled to a plug port 1333 on one side of the capacitor C1-2; and the DC-DC converter 1324 comprises an inductor L1-3, power switch devices Q1-3 and Q2-3, and capacitors C1-3 and C2-3, and is coupled to a plug port 1334 on one side of the capacitor C1-3. A boost operation and an MPPT operation may be performed on the groups of cell units coupled to the terminal members 120-1, 120-2 and 120-3, respectively, by controlling the power switch devices Q1-1, Q1-2 and Q1-3 (e.g., in a PWM control mode). Although the plurality of DC-DC converters 1322, 1323, 1324 are described by taking the boost converter as an example, the plurality of DC-DC converters 1322, 1323, 1324 may be implemented as other types of DC-DC conversion circuits, such as DC buck converters, as actually needed.

In addition, in a case where photovoltaic panel 110 employs stacked photovoltaic cells as described above, since a level of voltage output by the perovskite cells is typically much higher than that output by the crystalline silicon cells, the output of the crystalline silicon cell array may be coupled to the plurality of DC-DC converters 1322, 1323, 1324 to boost the lower-level voltage output by the crystalline silicon cell array to a voltage substantially close to the voltage output by the perovskite cells, and the output of the perovskite cells may be coupled directly to the DC-AC converter 1321. In this way, the power output from the two types of photovoltaic cells may be combined into power on one path that is output to the DC-AC converter 1321, thereby effectively achieving power output to the power grid or load.

In some embodiments of the present disclosure, the inverter circuit 132 comprises a gallium nitride power device. For example, the power switch devices in the plurality of DC-DC converters 1322, 1323, 1324 and DC-AC converter 1321 may employ the gallium nitride power device. In general, in inverter device 130, the power switch devices take up a large amount of space. The gallium nitride power devices each have a higher power density, a smaller size, and a greater high temperature stability. Use of the gallium nitride power devices may reduce the amount of space occupied by the power switch devices, thereby substantially reducing the size of the inverter device 130 and enabling the use of a smaller housing 131, which further facilitates the pre-mounting and integration of the inverter device 130 into the separation region 112 on the photovoltaic panel 110.

In embodiments of the present disclosure, the inverter device may be pre-mounted and integrated on the photovoltaic panel by shaping the inverter device into a bar and mounting the inverter device against a plurality of terminal members, thereby facilitating transportation of photovoltaic apparatus and reducing field installation workload and installation costs, and eliminating wiring errors and personnel safety issues that might result from field installation.

Many modifications and other embodiments of the present disclosure set forth herein will come to mind to one skilled in the art to which the present disclosure pertains having the benefit of the teachings presented in the foregoing depictions and the relevant drawings. Therefore, it is to be understood that the embodiments of the present disclosure are not to be limited to the specific embodiments disclosed and that modifications and other embodiments are intended to be included within the scope of the present disclosure. In addition, while the above description and related drawings describe example embodiments in the context of certain example combinations of elements and/or functions, it should be appreciated that different combinations of elements and/or functions may be provided by alternative embodiments without departing from the scope of the present disclosure. In this regard, for example, other combinations of features and/or functions different from those expressly described above are also contemplated as being within the scope of the present disclosure. Although specific terms are employed herein, they are used in a general and descriptive sense only and not for purpose of limitation.

## Claims

1. A photovoltaic power generation apparatus (100), comprising:
a photovoltaic panel (110) comprising a photovoltaic cell unit array (111A, 111B) and a first surface (F1) and a second surface (F2) opposite each other;
a plurality of terminal members (120-1, 120-2, 120-3) mounted independently of each other on the first surface (F1) of the photovoltaic panel (110) and each electrically coupled to a respective portion of photovoltaic cell units in the photovoltaic cell unit array (111A, 111B); and
an inverter device (130) mounted on the first surface (F1) of the photovoltaic panel (110) and comprising a bar-shaped hollow housing (131) and an inverter circuit (132) located in the bar-shaped hollow housing (131), the inverter circuit (132) being electrically coupled to the plurality of terminal members (120-1, 120-2, 120-3) and configured to convert direct current power received from the photovoltaic cell unit array (111A, 111B) via the plurality of terminal members (120-1, 120-2, 120-3) into alternating current power, the bar-shaped hollow housing (131) being arranged to extend in an arrangement direction of the plurality of terminal members (120-1, 120-2, 120-3) and to abut against the plurality of terminal members (120-1, 120-2, 120-3).

2. The photovoltaic power generation apparatus (100) according to claim 1, wherein the photovoltaic cell unit array (111A, 111B) comprises a first sub-array (111A) and a second sub-array (111B) separated from each other by a separation region (112) in the photovoltaic panel (110), and the plurality of terminal members (120-1, 120-2, 120-3) and the inverter device (130) are arranged on a partial surface of the first surface (F1) corresponding to the separation region (112).

3. The photovoltaic power generation apparatus (100) according to claim 2, wherein a width (W1) of a side surface of the bar-shaped hollow housing (131) facing towards the first surface (F1) is less than a spacing (W2) between the first sub-array (111A) and the second sub-array (111B).

4. The photovoltaic power generation apparatus (100) according to any of claims 1 to 3, wherein the bar-shaped hollow housing (131) is detachably fixed to the plurality of terminal members (120-1, 120-2, 120-3), and the inverter circuit (132) is electrically coupled to the plurality of terminal members (120-1, 120-2, 120-3) in a pluggable manner.

5. The photovoltaic power generation apparatus (100) according to any of claims 1 to 3, wherein the plurality of terminal members (120-1, 120-2, 120-3) are adhesively fixed to the first surface (F1) of the photovoltaic panel (110).

6. The photovoltaic power generation apparatus (100) according to claim 1, wherein each terminal member (120-1, 120-2, 120-3) comprises a shell (121-1, 121-2, 121-3), terminals (122-1, 122-2, 122-3), and a waterproof member.

7. The photovoltaic power generation apparatus (100) according to claim 1, wherein the photovoltaic cell unit array (111A, 111B) comprises a plurality of groups of photovoltaic cell units (111-1, 111-2, 111-3) corresponding to the plurality of terminal members (120-1, 120-2, 120-3), the photovoltaic cell units in each group of photovoltaic cell units (111-1, 111-2, 111-3) being connected to each other in series, parallel, or series-parallel, and electrically coupled to the respective terminal member (120-1, 120-2, 120-3), and
wherein the inverter circuit (130) comprises a DC-AC converter (1321) and a plurality of DC-DC converters (1322, 1323, 1324), the plurality of DC-DC converters (1322, 1323, 1324) being electrically coupled to the plurality of terminal members (120-1, 120-2, 120-3), respectively, at an input side thereof, and being connected in series with each other, in parallel with each other or in series-parallel with each other at an output side thereof.

8. The photovoltaic power generation apparatus (100) according to claim 1, wherein the inverter circuit (132) comprises a gallium nitride power device.

9. The photovoltaic power generation apparatus (100) according to claim 1, wherein the first surface (F1) is a back surface of the photovoltaic panel (110) and the second surface (F2) is a front surface of the photovoltaic panel (110).

10. The photovoltaic power generation apparatus (100) according to claim 1, wherein the photovoltaic panel (110) further comprises a frame (113), and a height that the bar-shaped hollow housing (131) projects outwardly from the first surface (F1) is no more than a height that the frame (113) projects outwardly from the first surface (F1).

11. The photovoltaic power generation apparatus (100) according to claim 1, wherein the bar-shaped hollow housing (131) comprises a heat dissipation mechanism located on a side surface of the bar-shaped hollow housing (131) facing away from the first surface (F1).

12. A photovoltaic power generation system (10), comprising:
at least one photovoltaic power generation apparatus (100) according to any of claims 1 to 11.
